# EUROPEAN PATENT APPLICATION

(11) **EP 3 751 661 A1**
(43) Date of publication of application: **16.12.2020**
(21) Application number: 19750723.9
(22) Date of filing: 23.01.2019
(51) Int. Cl.: H01M 10/613

(54) **LIQUID COOLING PIPELINE AND POWER SUPPLY APPARATUS**

(30) Priority: 09.02.2018 CN 201820248746 U
(71) Applicant: BYD Company Limited, Guangdong 518118 (CN)
(72) Inventor: LU, Jia, Shenzhen, Guangdong 518118 (CN); LU, Zhipei, Shenzhen, Guangdong 518118 (CN); ZHU, Yan, Shenzhen, Guangdong 518118 (CN)
(74) Representative: Arnold & Siedsma
(86) International application number: PCT/CN2019/072800
(87) International publication number: WO 2019/154083

(57) **Abstract**

A liquid cooling pipeline (200) and a power supply device (100) are provided. The liquid cooling pipeline (200) includes a liquid inlet end (5), a liquid outlet end (6), a horizontal liquid cooling pipe (7) extending in a horizontal direction, and a vertical liquid cooling pipe (8) extending in a vertical direction, the horizontal liquid cooling pipe (7) and the vertical liquid cooling pipe (8) being connected between the liquid inlet end (5) and the liquid outlet end (6).

## Description

### CROSS-REFERENCE TO RELATED APPLICATIONS

This application claims priority to Chinese Patent Application No. "CN201820248746.8", entitled "LIQUID COOLING PIPELINE AND POWER SUPPLY DEVICE" filed by BYD Company Limited on February 9, 2018.

### FIELD

This application relates to the technical field of power supply cooling, and in particular, to a liquid cooling pipeline and a power supply device.

### BACKGROUND

With the improvement of people's awareness of environmental protection, an electric vehicle is becoming increasingly popular as a new-energy green vehicle. Because an on-board battery is used in the electric vehicle to supply power to an electric motor to output power, the electric vehicle has significant effects in energy conversation and environmental protection.

A most significant problem of the electric vehicle is a range of the battery. In order to achieve a longer range and other functions, a main method at present is to dispose a plurality of battery packs in the electric vehicle. However, due to a space limitation, a range provided by the plurality of battery packs is also limited. Therefore, in order to meet an increasing demand for great energy and high power, there is an urgent need to develop a high-energy battery material. For example, a ternary material has high energy but poorer safety performance than that of lithium iron phosphate, especially when used in a high-power power battery, a temperature of the battery rise rapidly. In addition, with current needs of a lightweight and compact electric vehicle, a space for battery is getting smaller and smaller, and arrangement of battery inside a pack is becoming increasingly limited. An existing complex liquid cooling structure cannot be freely arranged in the limited space of the battery pack to meet effective heat dissipation of a battery made of the ternary material.

### SUMMARY

The present application is intended to resolve at least one of the technical problems in the related art to some extent.

This application provides a liquid cooling pipeline with a simple structure. In actual use, the liquid cooling pipeline may be arranged in a limited space of a power supply device as required to effectively dissipate heat from a power supply unit in the power supply device, thereby improving heat management and temperature consistency of the power supply device.

This application further provides a power supply device having an advantage of a good effect of heat dissipation.

In order to achieve the foregoing objective, this application provides a liquid cooling pipeline to cool a power supply device. The liquid cooling pipeline includes a liquid inlet end, a liquid outlet end, a horizontal liquid cooling pipe extending in a horizontal direction, and a vertical liquid cooling pipe extending in a vertical direction, the horizontal liquid cooling pipe and the vertical liquid cooling pipe being connected between the liquid inlet end and the liquid outlet end.

In this way, when the liquid cooling pipeline is assembled to the power supply device, the horizontal liquid cooling pipe may be thermally conductively connected to a horizontal heat dissipation surface of a horizontal battery power supply, such as between a bottom surface of an inner cavity of a tray of the power supply device and a horizontal heat dissipation surface of the horizontal battery cell, and the vertical liquid cooling pipe may be thermally conductively connected to a vertical heat dissipation surface of the vertical battery cell, so as to perform good heat dissipation on each battery cell. In some embodiments, when there is a height difference between the horizontal battery cell and the vertical battery cell, a part of the vertical liquid cooling pipe is exposed in the inner cavity. The exposed part of the vertical liquid cooling pipe is adjacent to other components of the power supply device such as a power lead-out component and a maintenance switch component to reduce a rise in a temperature in the area, and assist in cooling an adjacent signal acquisition component and a lead-out component, etc., thereby effectively dissipating the power supply unit, and improving heat management and temperature consistency of the power supply device.

In addition, this application provides a power supply device, including a tray, a horizontal battery cell disposed on the tray, a vertical battery cell disposed on the tray, and any of the foregoing liquid cooling pipelines, where the horizontal battery cell includes a horizontal heat dissipation surface disposed horizontally, the vertical battery cell includes a vertical heat dissipation surface disposed vertically, the horizontal liquid cooling pipe being thermally conductively connected to the horizontal heat dissipation surface of the horizontal battery cell, and the vertical liquid cooling pipe being thermally conductively connected to the vertical heat dissipation surface of the vertical battery cell.

Based on the foregoing, because the horizontal liquid cooling pipe is thermally conductively connected to the horizontal heat dissipation surface of the horizontal battery power supply, such as between a bottom surface of an inner cavity of the tray of the power supply device and a horizontal heat dissipation surface of the horizontal battery cell, and the vertical liquid cooling pipe may be thermally conductively connected to a vertical heat dissipation surface of the vertical battery cell, so as to perform good heat dissipation on each battery cell. In some embodiments, when there is a height difference between the horizontal battery cell and the vertical battery cell, a part of the vertical liquid cooling pipe is exposed in the inner cavity. The exposed part of the vertical liquid cooling pipe is adjacent to other components of the power supply device such as a power lead-out component and a maintenance switch component to reduce a rise in a temperature in the area, and assist in cooling an adjacent signal acquisition component and a lead-out component, etc., thereby effectively dissipating the power supply unit, and improving heat management and temperature consistency of the power supply device.

### BRIEF DESCRIPTION OF THE DRAWINGS

FIG. 1 is a schematic structural diagram of a power supply device according to a specific implementation of this application, a cover body of the power supply device covering a tray being not shown; and
FIG. 2 is a schematic structural diagram of a liquid cooling pipeline according to a specific implementation of this application.

### DESCRIPTION OF REFERENCE NUMERALS

1-Tray, 2-Horizontal Battery cell, 3-Vertical battery cell, 4-Vertical heat dissipation surface, 5-Liquid inlet end, 6-Liquid outlet end, 7-Horizontal liquid cooling pipe, 8-Vertical liquid cooling pipe,
100-Power supply device, 200-Liquid cooling pipeline, 201-Horizontal heat dissipation surface, 202-Fluid pipeline, 10-Inner cavity, 11-Mounting space.

### DETAILED DESCRIPTION

Specific implementations of this application are described in detail below with reference to the accompanying drawings. It should be understood that the specific implementations described herein are merely used for describing and illustrating this application rather than limiting this application.

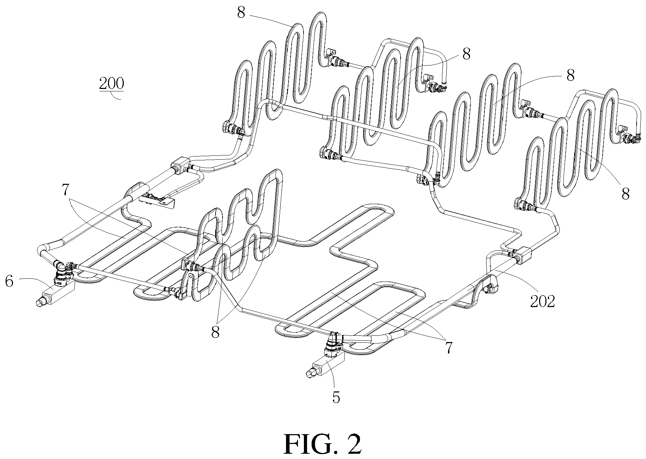

Referring to a structure shown in FIG. 2, a liquid cooling pipeline 200 provided according to this application is configured to cool a power supply device 100. The liquid cooling pipeline 200 includes a liquid inlet end 5, a liquid outlet end 6, a horizontal liquid cooling pipe 7 extending in a horizontal direction, and a vertical liquid cooling pipe 8 extending in a vertical direction, for example, a horizontal liquid cooling pipe 7 configured to cool a horizontal heat dissipation surface 201 of a horizontal battery cell 2 disposed horizontally and a vertical liquid cooling pipe 8 configured to cool a vertical heat dissipation surface 4 of a vertical battery cell 3 disposed vertically. For example, the horizontal liquid cooling pipe 7 may be disposed between the horizontal heat dissipation surface 201 of the horizontal battery cell 2 disposed horizontally in the inner cavity 10 of a tray 1 of the power supply device 100 and a bottom surface of an inner cavity 10, and the vertical liquid cooling pipe 8 may be disposed on the vertical heat dissipation surface 4 of the vertical battery cell 3 disposed vertically in the inner cavity 10 of the tray 1 of the power supply device 100, where the horizontal liquid cooling pipe 7 and the vertical liquid cooling pipe 8 are connected between the liquid inlet end 5 and the liquid outlet end 6 through a fluid pipeline 202.

In this way, when the liquid cooling pipeline 200 is assembled to the power supply device 100, the horizontal liquid cooling pipe 7 may be thermally conductively connected to the horizontal heat dissipation surface 201 of a horizontal battery power supply, such as between a bottom surface of an inner cavity 10 of a tray 1 of the power supply device 100 and a horizontal heat dissipation surface 201 of the horizontal battery cell 2, and the vertical liquid cooling pipe 8 may be thermally conductively connected to the vertical heat dissipation surface 4 of the vertical battery cell 3, to perform good heat dissipation on each battery cell. In some embodiments, when there is a height difference between the horizontal battery cell 2 and the vertical battery cell 3, a part of the vertical liquid cooling pipe 8 is exposed in the inner cavity 10. The exposed part of the vertical liquid cooling pipe 8 is adjacent to other components of the power supply device 100 such as a power lead-out component and a maintenance switch component to reduce a rise in a temperature in the area, and assist in cooling an adjacent signal acquisition component and a lead-out component, etc., so as to effectively dissipate the power supply unit, thereby improving heat management and temperature consistency of the power supply device 100.

Definitely, a cross-sectional shape of the liquid cooling pipe may have a plurality of structural forms, such as a round pipe or a rectangular pipe. Definitely, in order to further increase a contact with a heat-dissipation bottom surface of the battery cell, preferably, as shown in FIG. 2, at least one of the horizontal liquid cooling pipe 7 and the vertical liquid cooling pipe 8 is a flat pipe, and extends in a reciprocating and bending manner, preferably extending reciprocally in a same plane, so as to be in contact with the heat-dissipation bottom surface of the battery cell as much as possible to enhance a heat exchange effect.

In addition, the horizontal liquid cooling pipe 7 and the vertical liquid cooling pipe 8 may be connected in series between the liquid inlet end 5 and the liquid outlet end 6. Alternatively, in order to prevent overheating of liquid flowing in the liquid cooling pipeline from reducing an effect of heat dissipation of a subsequent battery cell, preferably, as shown in FIG. 2, the horizontal liquid cooling pipe 7 and the vertical liquid cooling pipe 8 are connected in parallel between the liquid inlet end 5 and the liquid outlet end 6. In this way, as shown in FIG. 2, liquid entering from the liquid inlet end 5 is divided into a plurality of paths through a three-way valve or a four-way valve and enters the horizontal liquid cooling pipe 7 and the vertical liquid cooling pipe 8, so that initial temperatures of liquid entering the paths of the horizontal liquid cooling pipe 7 and the vertical liquid cooling pipe 8 are basically the same, thereby improving a heat exchange effect.

In addition, as shown in FIG. 2, there are at least two horizontal liquid cooling pipes 7, and two of the horizontal liquid cooling pipes are connected in series to form a set of the horizontal liquid cooling pipes, thereby simplifying a pipeline connection while ensuring effective heat dissipation. For example, in a case of two horizontal liquid cooling pipes 7, the two horizontal liquid cooling pipes 7 are connected in series. Alternatively, in a case of three horizontal liquid cooling pipes 7, two of the horizontal liquid cooling pipes 7 after connected in series are connected in parallel with another horizontal liquid cooling pipe 7. Alternatively, at least two horizontal liquid cooling pipes 7 are connected in parallel. In this way, because cooling liquid does not interfere with each other, an effect of heat dissipation is further improved.

Similarly, as shown in FIG. 2, there are a plurality of vertical liquid cooling pipes 8 arranged at intervals. Two vertical liquid cooling pipes 8 are connected in series to form a set of vertical liquid cooling pipes, and sets of vertical liquid cooling pipes are connected in parallel to simplify a pipeline connection while ensuring effective heat dissipation. For example, there are six vertical liquid cooling pipes 8 arranged at intervals. Each two of the vertical liquid cooling pipes are connected in series to form three sets of vertical liquid cooling pipes, the three sets of vertical liquid cooling pipes being connected in parallel. Alternatively, at least two vertical liquid cooling pipes 8 are connected in parallel. In this way, because cooling liquid does not interfere with each other, an effect of heat dissipation is further improved.

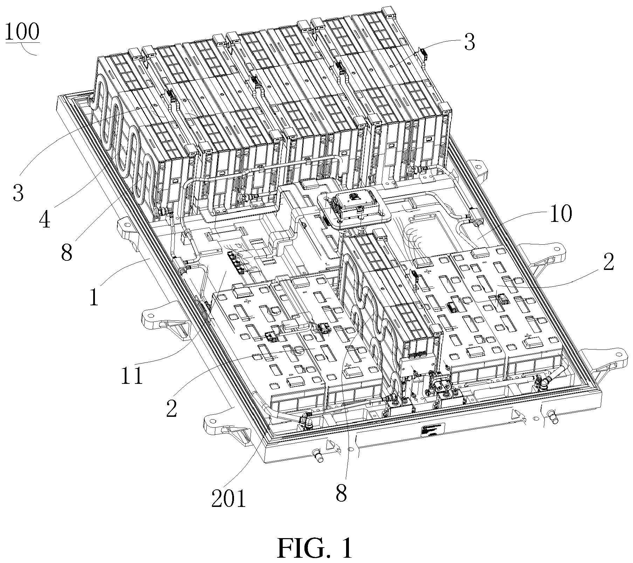

In addition, as shown in FIG. 1, this application provides a power supply device 100 (a battery pack or a tray assembly), the power supply device 100 including a tray 1, a horizontal battery cell 2 disposed on the tray 1, a vertical battery cell 3 disposed on the tray 1, and any of the foregoing liquid cooling pipelines 200. The horizontal battery cell 2 includes a horizontal heat dissipation surface 201 disposed horizontally, the vertical battery cell 3 includes a vertical heat dissipation surface 4 disposed vertically. The horizontal liquid cooling pipe 7 is thermally conductively connected to the horizontal heat dissipation surface 201 of the horizontal battery cell 2, and the vertical liquid cooling pipe 8 is thermally conductively connected to the vertical heat dissipation surface 4 of the vertical battery cell 3.

Based on the foregoing, because the horizontal liquid cooling pipe 7 is thermally conductively connected to the horizontal heat dissipation surface 201 of the horizontal battery power supply, such as between a bottom surface of an inner cavity 10 of a tray 1 of the power supply device 100 and the horizontal heat dissipation surface 201 of the horizontal battery cell 2, and the vertical liquid cooling pipe 8 is thermally conductively connected to the vertical heat dissipation surface 4 of the vertical battery cell 3, heat dissipation is well performed on each battery cell. In some embodiments, when there is a height difference between the horizontal battery cell 2 and the vertical battery cell 3, a part of the vertical liquid cooling pipe 8 is exposed in the inner cavity 10. The exposed part of the vertical liquid cooling pipe 8 is adjacent to other components of the power supply device 100 such as a power lead-out component and a maintenance switch component to reduce a rise in a temperature in the area, and assist in cooling an adjacent signal acquisition component and a lead-out component, etc., so as to effectively dissipate the power supply unit, thereby improving heat management and temperature consistency of the power supply device 100.

In some embodiments, the horizontal battery cell 2 includes a vertical heat dissipation surface 4 disposed vertically, the vertical heat dissipation surface 4 of the horizontal battery cell 2 being thermally conductively connected to the vertical liquid cooling pipe 8. In this way, the vertical liquid cooling pipe 8 may be configured to assist in heat dissipation of a horizontal battery cell 2 closely disposed, thereby further improving an effect of heat dissipation of the horizontal battery cell 2.

In some embodiments, as shown in FIG. 1, there are two horizontal battery cells 2 arranged at intervals, such as two horizontal battery cells shown in the figure, to leave a mounting space 11 between each other. A vertical battery cell 3 is disposed in the mounting space 11. In this way, a space of an inner cavity 10 may be fully utilized to arrange more battery cells, so as to improve a range of the power supply device 100. Further, in some embodiments, a vertical heat dissipation surface 4 of the vertical battery cell 3 disposed in the mounting space 11 is higher than, for example, the horizontal battery cell 2 of which the vertical heat dissipation surface 4 faces one side, so that a part of the vertical liquid cooling pipe 8 thermally conductively connected to the vertical heat dissipation surface 4 of the vertical battery cell 3 disposed in the mounting space 11 leaks out. In this way, there is a height difference between a horizontal battery cell 2 and a vertical battery cell 3 between two horizontal battery cells 2, so that a part of the vertical liquid cooling pipe 8 arranged on the vertical heat dissipation surface 4 of the vertical battery cell 3 is exposed. The exposed part of the vertical liquid cooling pipe 8 is adjacent to other components such as a power lead-out component and a maintenance switch component of the power supply device 100 to reduce a rise in a temperature in the area and assist in cooling an adjacent signal acquisition component and a lead-out component, thereby effectively dissipating heat of a power supply unit and improving heat management and temperature consistency of the power supply device 100.

In some embodiments, as shown in FIG. 1, there are two horizontal battery cells 2 respectively disposed at two corners of an end of an inner cavity 10 of the tray 1. One of a plurality of vertical battery cells 3 is disposed between two horizontal battery cells 2, and remaining vertical battery cells 3 are disposed at the other end of the inner cavity 10 of the tray 1. In this way, more vertical battery cells 3 may be disposed at the other end of the inner cavity 10, and there are two horizontal battery cells 2 and one vertical battery cell 3 at one end of the inner cavity 10. In this way, a part of the vertical liquid cooling pipe 8 disposed on the vertical heat dissipation surface 4 of a vertical battery cell 3 arranged between two horizontal battery cells 2 is exposed to cool a nearby area.

In addition, it should be understood that the inner cavity 10 of the power supply device 100 may be any shape, for example, preferably, the inner cavity 10 is rectangular, the horizontal battery cell 2 and the vertical battery cell 3 are rectangular, and lengths of the horizontal battery cell 2 and the vertical battery cell 3 follow a length of the inner cavity 10. In particular, as shown in FIG. 1, in this way, an internal space of the inner cavity 10 may be fully utilized to arrange more required battery cells.

In addition, the horizontal battery cell 2 and the vertical battery cell 3 may be same battery cells, so that a horizontally arranged battery cell is the horizontal battery cell 2, and a vertically arranged battery cell is a vertical battery cell 3, helping, according to a required arrangement, form a required power supply device 100 by using the same battery cells.

In some embodiments, the same battery cells have only one heat dissipation surface respectively. When the battery cell is arranged transversely (horizontally), the heat dissipation surface is located between the battery cell and a bottom plate of the tray 1 to form a horizontal heat dissipation surface 201, and the battery cell is a horizontal battery cell 2. When the battery cell is arranged vertically, the heat dissipation surface is located in a direction perpendicular to the bottom plate of the tray to form a vertical heat dissipation surface 4, and the battery cell is a vertical battery cell 3.

The preferred embodiments of this application are described in detail above with reference to the accompanying drawings, but this application is not limited thereto. Various simple variations, including the combination of the technical features in any suitable manner, may be made to the technical solutions of this application within the scope of the technical idea of this application. To avoid unnecessary repetition, various possible combinations are not further described in this application. However, such simple variations and combinations shall also be considered as the content disclosed by this application and shall all fall within the protection scope of this application.

## Claims

1. A liquid cooling pipeline (200) for cooling a power supply device (100) comprising:
a liquid inlet end (5),
a liquid outlet end (6),
a horizontal liquid cooling pipe (7) extending in a horizontal direction, and
a vertical liquid cooling pipe (8) extending in a vertical direction, wherein the horizontal liquid cooling pipe (7) and the vertical liquid cooling pipe (8) being connected between the liquid inlet end (5) and the liquid outlet end (6).

2. The liquid cooling pipeline (200) according to claim 1, wherein at least one of the horizontal liquid cooling pipe (7) and the vertical liquid cooling pipe (8) is a flat pipe and extends in a reciprocating and bending manner.

3. The liquid cooling pipeline (200) according to claim 1 or 2, wherein the horizontal liquid cooling pipe (7) and the vertical liquid cooling pipe (8) are connected in parallel between the liquid inlet end (5) and the liquid outlet end (6).

4. The liquid cooling pipeline (200) according to any of claims 1 to 3, wherein there are at least two horizontal liquid cooling pipes (7), two horizontal liquid cooling pipes (7) being connected in series to form a set of horizontal liquid cooling pipes; or at least two horizontal liquid cooling pipes (7) being connected in parallel.

5. The liquid cooling pipeline (200) according to any of claims 1 to 4, wherein there are a plurality of vertical liquid cooling pipes (8) arranged at intervals, two vertical liquid cooling pipes (8) being connected in series to form a set of vertical liquid cooling pipes, and sets of vertical liquid cooling pipes (8) being connected in parallel; or at least two vertical liquid cooling pipes (8) being connected in parallel.

6. A power supply device (100), comprising:
a tray (1),
a horizontal battery cell (2) disposed on the tray (1),
a vertical battery cell (3) disposed on the tray (1), and
the liquid cooling pipeline (200) according to any of claims 1 to 5, wherein the horizontal battery cell (2) comprises a horizontal heat dissipation surface (201) disposed horizontally, the vertical battery cell (3) comprises a vertical heat dissipation surface (4) disposed vertically, the horizontal liquid cooling pipe (7) being thermally conductively connected to the horizontal heat dissipation surface (201) of the horizontal battery cell (2), and the vertical liquid cooling pipe (8) being thermally conductively connected to the vertical heat dissipation surface (4) of the vertical battery cell (3).

7. The power supply device (100) according to claim 6, wherein the horizontal battery cell (2) comprises a vertical heat dissipation surface (4) disposed vertically, the vertical heat dissipation surface (4) of the horizontal battery cell (2) being thermally conductively connected to the vertical liquid cooling pipe (8).

8. The power supply device (100) according to claim 7, wherein there are a plurality of horizontal battery cells (2) arranged at intervals to leave a mounting space (11) between each other, the vertical battery cell (3) being disposed in the mounting space (11), wherein the vertical heat dissipation surface (4) of the vertical battery cell (3) disposed in the mounting space (11) is higher than the horizontal battery cell (2), whereby a part of the vertical liquid cooling pipe (8) thermally conductively connected to the vertical heat dissipation surface (4) of the vertical battery cell (3) disposed in the mounting space (11) leaks out.

9. The power supply device (100) according to claim 8, wherein there are two horizontal battery cells (2) respectively disposed at two corners of an end of an inner cavity (10) of the tray (1); and one of the plurality of vertical battery cells (3) is disposed between the two horizontal battery cells (2), and the remaining vertical battery cells (3) are disposed at the other end of the inner cavity (10) of the tray (1).

10. The power supply device (100) according to any of claims 6 to 9, wherein the horizontal battery cell (2) and the vertical battery cell (3) are identical, a horizontally disposed battery cell is the horizontal battery cell (2), and a vertically disposed battery cell is the vertical battery cell (3).
